# EUROPÄISCHE PATENTSCHRIFT

(11) **EP 3 043 227 B1**
(45) Veröffentlichungstag und Bekanntmachung des Hinweises auf die Patenterteilung: **08.07.2020**
(21) Anmeldenummer: 15003622.6
(22) Anmeldetag: 07.02.2014
(51) Int. Cl.: G05D 7/01, G05D 23/02

(54) **SANITÄRES EINBAUTEIL UND DUSCHANORDNUNG**
SANITARY BUILT-IN PIECE AND SHOWER ASSEMBLY
COMPOSANT SANITAIRE ET SYSTEME DE DOUCHE

(30) Priorität: 11.03.2013 DE 202013002281 U
(43) Veröffentlichungstag der Anmeldung: 13.07.2016
(62) Teilanmeldung aus: 14703542.2
(73) Patentinhaber: Neoperl GmbH, 79379 Müllheim (DE)
(72) Erfinder: Tempel, Marc, 79111 Freiburg (DE)
(74) Vertreter: Maucher Jenkins Patent- und Rechtsanwälte

(56) Entgegenhaltungen:
- DE-A1- 10 132 001
- US-A1- 2009 007 972
- US-A1- 2009 308 459
- US-A1- 2012 247 582

## Beschreibung

Die Erfindung betrifft ein sanitäres Einbauteil mit einer in einem Strömungspfad angeordneten Mengenreglereinheit, die ein bewegliches Stellelement aufweist, wobei mit dem Stellelement eine durch die Mengenreglereinheit definierte Durchflussmenge einstellbar ist, und mit einem in Abhängigkeit von einer Temperatur form- und/oder größenveränderlichen Steuerelement, welches in dem Strömungspfad angeordnet ist und mit dem Stellelement in Wirkverbindung steht, wobei mit dem Steuerelement bei einer Änderung der Temperatur über einen Temperaturbereich zwischen einem unteren Temperaturwert und einem oberen Temperaturwert das Stellelement entlang eines Stellweges zwischen einer Anfangsposition und einer Endposition verstellbar ist.

Die Erfindung betrifft weiter ein sanitäres Einbauteil, insbesondere wie zuvor beschrieben, mit einer in einem Strömungspfad angeordneten Mengenreglereinheit, die ein bewegliches Stellelement aufweist, wobei mit dem Stellelement eine durch die Mengenreglereinheit definierte Durchflussmenge einstellbar ist, und mit einem in Abhängigkeit von einer Temperatur formveränderlichen Steuerelement, welches in dem Strömungspfad angeordnet ist und mit dem Stellelement in Wirkverbindung steht, wobei eine Erhöhung der Temperatur am Steuerelement eine Verstellung des Stellelements hin zu größeren Durchflussmengen bewirkt, und mit einer das Stellelement beaufschlagenden Rückstellfeder.

Die Erfindung betrifft schließlich eine Duschanordnung mit einem in einem Strömungspfad angeordneten Heizelement, welches vorzugsweise mit einer konstanten Heizleistung ausgebildet ist, und mit einer dem Heizelement in Strömungsrichtung vorgeschalteten sanitären Einbauteil.

Derartige sanitäre Einbauteile sind bekannt und werden verwendet, um eine Durchflussmenge in Abhängigkeit von einer Eingangstemperatur einem Heizelement mit einer konstanten Heizleistung derart zuzuführen, dass: die Temperatur der erwärmten Flüssigkeit nahezu konstant ist. Hierbei wird benutzt, dass bei einer höheren Eingangstemperatur eine größere Durchflussmenge eingestellt werden muss, wenn verhindert werden soll, dass das Heizelement die Flüssigkeit über einen Temperatur-Grenzwert hinaus erwärmt.

Beispielsweise ist aus der GB 2339885 B ein sanitäres Einbauteil bekannt, bei welchem ein Stellelement diskret und stufenlos zwischen genau einer Sommerstellung und genau einer Winterstellung umschaltbar ist, um der erhöhten Eingangstemperatur des Wassers im Sommer Rechnung zu tragen.:

Aus der US 2009/308459 A1 ist ein Ventil vorbekannt, durch das Wasser mit hohem Druck geführt werden kann, wenn die Wassertemperatur unterhalb einem festgelegten Temperaturlevel liegt. Wenn die Wassertemperatur aber den festgelegten Temperaturlevel erreicht oder gar übersteigt, reduziert das vorbekannte Ventil die Durchflussleistung von der hohen Durchflussrate auf eine demgegenüber, reduzierte Durchflussmenge. Somit kann das Ventil die oberhalb des Ventils anstehende Menge kalten Wassers rasch ablassen, um die Durchflussleistung anschließend auf die geringere Durchflussrate abzusenken, wenn das Wasser einen komfortablen Temperaturgrad erreicht hat. Das vorbekannte Ventil weist dazu ein Ventilgehäuse auf, das eine Ablauföffnung sowie eine zentrale Zuströmöffnung hat, wobei neben der zentralen Zuströmöffnung seitlich davon noch weitere Nebenöffnungen in das Gehäuseinnere des Ventilgehäuses führen. Im Ventilgehäuse ist ein Schließkörper vorgesehen, der sich aufgrund eines in den Schließkörper integrierten temperatursensitiven Thermowachsgemisches in axialer Richtung derart aufweiten kann, dass der Schließkörper in einer Schließstellung die zentrale Zuströmöffnung dicht verschließt und das zum Ventil strömende Wasser nur über die Nebenöffnungen in das Gehäuseinnere des Ventilgehäuses einströmen kann. Ein dosiertes Einregeln der maximalen Durchflussleistung in Abhängigkeit von der Wassertemperatur ist mit dem vorbekannten Ventil jedoch nicht möglich.

Aus der DE 101 32 001 A1 kennt man einen thermostatischen Regler, der zur Regelung der Durchflussmenge eines Fluids in einem Rohrleitungssystem bestimmt ist. Der vorbekannte Regler weist dazu eine Durchflussöffnung mit variablem Durchflussquerschnitt sowie ein dieser Durchflussöffnung zugeordnetes Ventilglied auf, das durch Ausdehnung beziehungsweise Kontraktion eines Dehnstoffelements in axialer Richtung bewegbar ist. In der DE 101 32 001 A1 sind zwei bevorzugte Varianten des vorbekannten Reglers vorgeschlagen, wovon in einem Ausführungsbeispiel eine Druckfeder vorgesehen ist, deren Federkraft in Schließrichtung des Ventilglieds einwirkt, wobei das Ventilglied über das Dehnstoffelement mit zunehmender: Temperatur des Fluids öffnet, während demgegenüber in dem anderen Ausführungsbeispiel eine Feder vorgesehen ist, deren Federkraft in Öffnungsrichtung einwirkt, wobei das Dehnstoffelement das Ventilglied mit zunehmender Temperatur des Fluids schließt. Mit dem vorbekannten Regler kann die Durchflussleistung des Reglers in Abhängigkeit von der Wassertemperatur des durchströmenden Wassers verändert werden. Ein Einregeln der Durchflussleistung auf einen druckunabhängigen Maximalwert ist demgegenüber auch bei dem aus DE 101 32 001 A1 vorbekannten Regler nicht vorgesehen.

Aus der US 2012/247582 A1 ist eine Regelventileinheit vorbekannt, die eine By-Pass-Strömungsführung während einer Aufwärmphase öffnet und die anschließend einen gleichmäßigen Kühlwasserstrom ermöglicht. Während dazu ein erstes Ventil einen Flüssigkeitsrückspülstrom von einem Flüssigkeitskühler Schließt, verschließt ein zweites Ventil die By-Pass-Strömungsführung zwischen der Flüssigkeitsquelle und dem Flüssigkeitsrückspülstrom. Ein Aktuator,der sich bei Erreichen und Überschreiten einer Temperatur in axialer Richtung gegen die Kraft einer Rückstellfeder bewegt, bildet den gemeinsamen Ventilkörper der beiden: Ventile. Die aus US 2012/247582 A1 vorbekannte, thermisch gesteuerte Regelventileinheit ist zum Einbau in eine By-Pass-Strömungsführung bestimmt, die durch das Ventilgehäuse verläuft und die einen Flüssigkeitsvorrat und einen Flüssigkeitsrückspülstrom miteinander verbindet, welcher Flüssigkeitsrückspülstrom mit einer Heißwasserquelle und einem Flüssigkeitskühler in Verbindung steht.

Aus der US 2009/0007972 A1 kennt man bereits eine Ventileinheit für einen Wasserkreislauf, welche Ventileinheit ein in eine By-Pass-Strömungsführung zwischengeschaltetes Ventilgehäuse hat, wobei der By-Pass zwischen einer Heißwasserseite und einer Kaltwasserseite des Ventilgehäuses vorgesehen ist. Die Ventileinheit begrenzt den Wasserdurchfluss durch die By-Pass-Strömungsführung in Abhängigkeit der Wassertemperatur. Dabei lässt sich die vorbekannte Ventileinheit in der By-Pass-Strömung relativ zu ihrem Ventilsitz derart einstellen und positionieren, dass die Ventil-Einheit die By-Pass-Strömungsführung bei Erreichen und Überschreiten einer festgelegten Wassertemperatur auch schließt.

Keine der vorgenannten Druckschriften zeigt einen Durchflussmengenregler, der die durchfließende Wassermenge auf einen Maximalwert einregeln könnte. Erst recht ist in keiner der vorgenannten Druckschriften ein Durchflussmengenregler vorbeschrieben, dessen maximale Durchflussleistung in Abhängigkeit von der Wassertemperatur verändert werden könnte.

Der Erfindung liegt die Aufgabe zugrunde, die Gebrauchseigenschaften eines sanitären Einbauteils zu verbessern, wobei sich das erfindungsgemäße Einbauteil durch eine kompakte Bauform und seine vielseitige Einsetzbarkeit auszeichnen soll.

Zur Lösung der genannten Aufgabe schlägt die Erfindung die im geltenden Anspruch 1 beschriebenen Merkmale vor.

Somit ist bei dem erfindungsgemäßen sanitären Einbauteil das Steuerelement und die Rückstellfeder im Strömungspfad abwärts in Bezug auf die Mengenreglereinheit abgeordnet. Die der Temperatursteuerung nachgeordnete Mengenreglereinheit weist ein bewegliches Stellelement auf, mit dem eine durch die Mengenreglereinheit definierte Durchflussmenge einstellbar ist. Das bewegliche Stellelement der Mengenreglereinheit steht mit einem mit Abhängigkeit von der Temperatur an der Eingangsseite formveränderlichen Steuerelement in Wirkverbindung, wobei eine Erhöhung der Temperatur am Steuerelement eine Verstellung des Stellelements hin zu größeren Durchflussmengen bewirkt. Diese, durch die Mengenreglereinheit definierte Durchflussmenge ist mit Hilfe des Stellelementes derart einstellbar, dass die definierte Durchflussmenge bei niedrigen Temperaturen geringer ist als bei höheren Temperaturen am Steuerelement.

Insbesondere wird somit erfindungsgemäß bei einem sanitären Einbauteil der eingangs beschriebenen Art vorgeschlagen, dass das Steuerelement und die Rückstellfeder im Strömungspfad auf derselben Seite der Mengenreglereinheit angeordnet sind. Von Vorteil ist dabei, dass eine kompakte Bauform erreichbar ist, die vielseitig einsetzbar ist.

Bei einer vorteilhaften Ausgestaltung kann vorgesehen sein, dass die Rückstellfeder als Schraubenfeder, als Wellenfeder, oder als Tellerfeder oder Stapelanordnung von Tellerfedern, ausgebildet ist. Von Vorteil ist dabei, dass die Rückstellfeder einen geringen Platzbedarf hat. Eine Wellenfeder erfordert einen besonders kleinen Bauraum und ermöglicht eine große Kraftentwicklung bei geringer Vorspannung. Eine Wellenfeder kann als schraubenförmig gewundener, vorzugsweise flacher Draht, der in seinem Verlauf Täler und Berge bildet, beschrieben werden. Somit können sich die einzelnen Windungen im entspannten Zustand oder (vor-) gespannten Zustand berühren, ohne dass die Wellenfeder auf Block ist. Die Täler und Berge der einzelnen Windungen sind in Umfangsrichtung häufig so versetzt, dass jeweils ein Berg einer Windung ein Tal der benachbarten Windung berührt und umgekehrt. Hierdurch ist eine Elastizität auch über die berührende Position hinaus erreichbar.

Bei einer vorteilhaften Ausgestaltung kann vorgesehen sein, das Steuerelement und/oder eine Steuerverbindung zwischen dem Stellelement und dem Steuerelement einen von der Rückstellfeder umschlossenen oder zumindest radial begrenzten Innenraum im Strömungspfad durchsetzt. Von Vorteil ist dabei, dass eine kurze axiale Baulänge erreichbar ist, da das Steuerelement und/oder die Steuerverbindung zumindest teilweise in einem von der Rückstellfeder umschlossenen oder begrenzten Innenraum angeordnet werden kann ist. Besonders günstig ist es hierbei, wenn die Rückstellfeder als Schraubenfeder, als Wellenfeder oder als Tellerfeder oder Stapelanordnung von Tellerfedern ausgebildet ist.

Bei einer vorteilhaften Ausgestaltung kann vorgesehen sein, dass an dem Stellelement ein die Rückstellfeder tragendes Führungselement ausgebildet ist. Besonders günstig ist es hierbei, wenn das Führungselement an dem Stellelement angeformt ist. Von Vorteil ist dabei, dass eine Beaufschlagung durch die Rückstellfeder geführt ausführbar ist.

Bei einer vorteilhaften Ausgestaltung kann vorgesehen sein, dass das Führungselement einen Durchströmkanal einschließt. Von Vorteil ist dabei, dass das Führungselement neben seiner Funktion als Führung für die Rückstellfeder zusätzlich die Funktion einer Durchleitung der Flüssigkeit übernehmen kann. Somit ist die Zahl der notwendigen Bauteile reduzierbar.

Besonders günstig ist es hierbei, wenn das Steuerelement thermisch an den Durchströmkanal angekoppelt ist. Von Vorteil ist dabei, dass das Steuerelement schnell oder mit einer kurzen Reaktionszeit auf Temperaturschwankungen in der einströmenden Flüssigkeit reagieren kann. Dies erhöht den Komfort bei der Nutzung der aufgewärmten Flüssigkeit nochmals erheblich.

Bei einer vorteilhaften Ausgestaltung kann vorgesehen sein, dass mit dem Stellelement eine Querschnittsfläche einer Öffnung einstellbar ist. Von Vorteil ist dabei, dass auf einfache Weise eine Mengenreglerfunktion mit veränderlicher Durchflussmenge realisierbar ist.

Bei einer vorteilhaften Ausgestaltung kann vorgesehen sein, dass das Stellelement eine sich verjüngende Grundform hat. Besonders einfach handhabbar ist hierbei eine konische Grundform. Von Vorteil ist dabei, dass ist auf einfache Weise durch eine Lageveränderung des Stellelements eine Größenveränderung der Querschnittsfläche einer Öffnung realisierbar ist.

Bei einer vorteilhaften Ausgestaltung kann vorgesehen sein, dass das Stellelement einen O-Ring durchsetzt, wobei der O-Ring bei einer steigenden Druckdifferenz über einer Öffnung die oder eine Öffnung verengt. Von Vorteil ist dabei, dass auf einfache Weise eine Mengenbegrenzung realisierbar ist.

Bei einer vorteilhaften Ausgestaltung kann vorgesehen sein, dass das Stellelement radial außenseitig längs des Strömungspfades verlaufende Nuten aufweist. Von Vorteil ist dabei, dass mit einem an den Nuten anliegenden O-Ring eine Mengenbegrenzung realisierbar ist.

Bei einer vorteilhaften Ausgestaltung kann vorgesehen sein, dass die Mengenreglereinheit, das Steuerelement und die Rückstellfeder in einer rohrförmigen Hülse angeordnet sind. Von Vorteil ist dabei, dass ein gehäusebildender Abschluss nach außen ausbildbar ist.

Bei einer vorteilhaften Ausgestaltung kann vorgesehen sein, dass die Mengenreglereinheit an einem ersten Axialende ausgebildet oder abgestützt und das Steuerelement an einem zweiten Axialende abgestützt ist. Von Vorteil ist dabei, dass Widerlager für die Expansions- bzw. Kontraktionsbewegungen des Steuerelements bereitstellbar sind.

Zur Lösung der genannten Aufgabe schlägt die Erfindung bei einer Duschanordnung der eingangs beschriebenen Art vor, dass sanitäre Einbauteil erfindungsgemäß, insbesondere wie zuvor beschrieben, ausgebildet ist. Von Vorteil ist dabei, dass eine mehrstufige Anpassung der Durchflussmenge an eine Eingangstemperatur einer einströmenden Flüssigkeit und/oder eine kompakte Bauform erreichbar sind.

Vorteilhaft kann es sein, wenn das Steuerelement bei wenigstens einem Zwischentemperaturwert zwischen dem unteren Temperaturwert und dem oberen Temperaturwert eine Zwischenposition des Stellelements im Stellweg zwischen der Anfangsposition und der Endposition einstellt. Von Vorteil ist dabei, dass eine feinere Regelung der Durchflussmenge in Abhängigkeit von der Temperatur am Steuerelement ermöglicht ist. Von Vorteil ist dabei weiter, dass ein größerer Temperaturbereich mit einem brauchbaren Regelverhalten erreichbar ist, als dies bei einer zwischen nur zwei Positionen umschaltbaren Anordnung der Fall wäre.

Bei einer vorteilhaften Ausgestaltung kann vorgesehen sein, dass die Zwischenposition von der Anfangsposition und/oder der Endposition wenigstens 1%, vorzugsweise wenigstens 10%, besonders vorzugsweise wenigstens 30%, einer Gesamtlänge des Stellweges beabstandet ist. Von Vorteil ist dabei, dass die Zwischenposition somit deutlich beabstandet von der Anfangsposition und der Endposition angeordnet ist, wodurch eine deutlich abweichende Durchflussmenge einstellbar ist. Somit sind wahrnehmbare Zwischenstufen einstellbar.

Bei einer vorteilhaften Ausgestaltung kann vorgesehen sein, dass das Steuerelement zu wenigstens drei voneinander verschiedenen Temperaturwerten drei voneinander verschiedene Formen und/oder Größen annimmt. Von Vorteil ist dabei, dass eine Abfolge von definierten Zuständen für die Regelung einsetzbar ist.

Bei einer vorteilhaften Ausgestaltung kann vorgesehen sein, dass das Steuerelement wenigstens zwei Materialkomponenten aufweist, die innerhalb des Temperaturbereichs voneinander verschiedene Ausdehnungskoeffizienten aufweisen. Von Vorteil ist dabei, dass die unterschiedlichen Ausdehungskoeffizienten nutzbar sind, um eine temperaturabhängige Formänderung zu erreichen, durch welche das Stellelement betätigbar ist.

Beispielsweise kann vorgesehen sein, dass das Stellelement ein Bimetallelement aufweist. Das Bimetallelement kann beispielsweise ein Bimetallstreifen oder eine Bimetallscheibe sein. Von Vorteil ist dabei, dass Bimetallelemente preisgünstig und zuverlässig sind.

Alternativ oder zusätzlich kann vorgesehen sein, dass das Steuerelement wenigstens zwei Materialkomponenten aufweist, die innerhalb des Temperaturbereichs voneinander verschiedene Phasenübergangstemperaturen haben. Die Verwendung von Materialien mit Phasenübergang hat den Vorteil, dass die schnelle Form- und/oder Größenänderung beim Phasenübergang für die Verstellung des Stellelements nutzbar ist. Auch sind an Phasenübergängen makroskopische Größenänderungen erreichbar, die nicht verstärkt werden müssen, um einen ausreichenden Stellweg zu überdecken.

Bei einer vorteilhaften Ausgestaltung kann vorgesehen sein, dass die Materialkomponenten in einer Stellrichtung hintereinander angeordnet sind. Hierdurch können größere Stellwege erreichbar sein. Es können auch Materialkomponenten mit unterschiedlichen Phasenübergangstemperaturen verwendet sein. Auf diese Weise ist erreichbar, dass bei voneinander unterschiedlichen Temperaturen unterschiedliche Materialkomponenten einen Phasenübergang durchlaufen, so dass ein gestufter Temperaturverlauf entsteht.

Bei einer vorteilhaften Ausgestaltung kann vorgesehen sein, dass die Materialkomponenten jeweils aus einem Material mit Formgedächtnis ausgebildet sind. Materialien mit Formgedächtnis stellen eine gut handhabbare Alternative zu Thermowachsen dar, da sie in normalen Betriebstemperaturen keinen flüssigen Aggregatzustand bilden. Außerdem ist eine definierte Formänderung erreichbar.

Bei einer vorteilhaften Ausgestaltung kann vorgesehen sein, dass die Materialkomponenten ein Materialgemisch bilden. Somit ist ein kompaktes Steuerelement bildbar, welches zu unterschiedlichen Temperaturen unterschiedlichen Formen und/oder Ausdehnungen annimmt.

Beispielsweise kann vorgesehen sein, dass das Materialgemisch ein Thermowachsgemisch ist, wobei die Materialkomponenten jeweils eine Thermowachskomponente sind und die Phasenübergangstemperaturen durch den jeweiligen Schmelzpunkt der Thermowachskomponente gegeben sind. Thermowachse haben sich im Sanitärbereich als temperaturabhängige Steuerelemente bewährt. Durch Zugabe von Zusatzstoffen lässt sich auf einfache Weise eine gewünschte Phasenübergangstemperatur einstellen. Somit kann der überstreichbare Temperaturbereich aufgefächert und mit einer Vielzahl von Stützpunkten versehen werden.

Bei einer vorteilhaften Ausgestaltung kann vorgesehen sein, dass das Stellelement in der Anfangsposition eine geringere Durchflussmenge definiert als in der Endposition. Somit ist die Durchflussmenge bei niedrigen Temperaturen geringer als bei höheren Temperaturen am Steuerelement. Hierdurch hat eine Flüssigkeit mit einer niedrigen Eingangstemperatur eine größere Verweildauer im Kreislauf und kann sich daher mehr erwärmen. Im Ergebnis erwärmt sich eine einströmende Flüssigkeit mit niedriger Temperatur mehr als eine einströmende Flüssigkeit mit hoher Temperatur. Im Ergebnis lässt sich sogar erreichen, dass die Ausgangstemperatur nahezu oder genau konstant ist, ohne dass eine Heizleistung nachgeregelt werden muss.

Alternativ oder zusätzlich kann vorgesehen sein, dass eine Erhöhung der Temperatur am Steuerelement eine Verstellung des Stellelements hin zu größeren Durchflussmengen bewirkt. Somit ist das sanitäre Einbauteil verwendbar, um eine schwankende Eingangstemperatur einer einströmenden Flüssigkeit durch eine Veränderung der Durchflussmenge derart, dass mit einem nachgeschalteten Heizelement konstanter Heizleistung eine konstante Temperatur erreicht wird, zu kompensieren.

Es kann auch vorgesehen sein, dass mit dem Steuerelement und dem Stellelement eine mit steigender Temperatur zunehmende Durchflussmenge der Mengenreglereinheit eingestellt ist. Somit ist die Verweildauer einer bereits sehr warmen Flüssigkeit im Kreislauf verkürzbar, so dass ein Überhitzen der Flüssigkeit vermeidbar ist.

Die Erfindung wird nun anhand von Ausführungsbeispielen näher beschrieben, ist aber nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt:
- Fig. 1: ein erfindungsgemäßes sanitäres Einbauteil in Explosionsdarstellung,
- Fig. 2: das sanitäre Einbauteil aus Fig.1 in einer Schnittdarstellung,
- Fig. 3: das sanitäre Einbauteil aus Fig.1 in Schnittdarstellung mit formveränderten Steuerelement,
- Fig. 4: ein weiteres erfindungsgemäßes sanitäres Einbauteil in Explosionsdarstellung mit einem Steuerelement mit Formgedächtnis,
- Fig. 5 bis Fig. 7: das sanitäre Einbauteil aus Fig.4 in jeweils einer Schnittdarstellung mit in unterschiedlichen Positionen befindlichem Stellelement,
- Fig. 8: ein weiteres erfindungsgemäßes sanitäres Einbauteil in Schnittdarstellung in der Anfangsposition bei Kaltwasser,
- Fig. 9: das sanitäre Einbauteil gemäß Fig.8 in der Endposition bei Warmwasser,
- Fig. 10: das sanitäre Einbauteil gemäß Fig.8 in dreidimensionaler Explosionsdarstellung,
- Fig. 11: eine erfindungsgemäße Duschanordnung und
- Fig. 12: eine Wellenfeder.

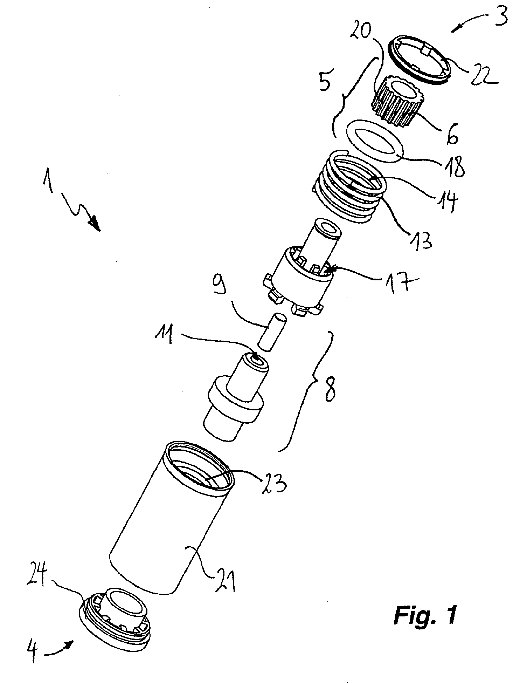

Figur 1 zeigt in einer Explosionsdarstellung ein erfindungsgemäßes sanitäres Einbauteil 1.

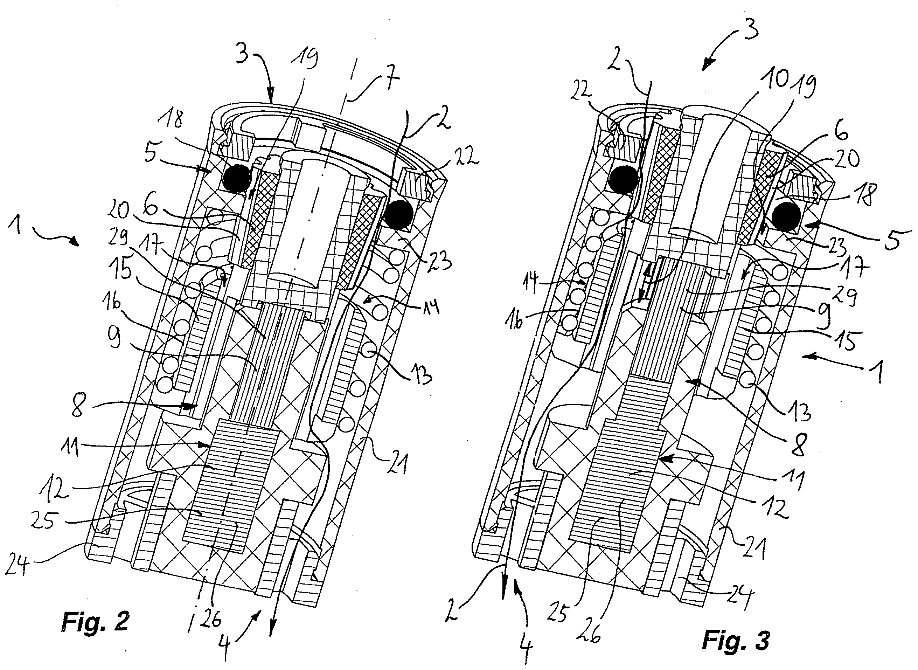

Figuren 2 und 3 zeigen das sanitäre Einbauteil 1 aus Figur 1 in Schnittdarstellungen in unterschiedlichen Schaltpositionen.

Im Folgenden werden die Figuren 1, 2 und 3 gemeinsam beschrieben.

In dem sanitären Einbauteil 1 ist ein Strömungspfad 2 ausgebildet, welcher von einer Eingangsseite 3 zu einer Ausgangsseite 4 führt.

In dem Strömungspfad 2 ist eine Mengenreglereinheit 5 angeordnet.

Die Mengenreglereinheit 5 weist ein bewegliches Stellelement 6 auf.

Das Stellelement 6 ist axial, das heißt parallel zu einer Längsachse 7, verschiebbar in dem sanitären Einbauteil 1 angeordnet.

Mit dem Stellelement 6 ist durch diese Verschiebung eine veränderliche Durchflussmenge entlang des Strömungspfades 2 einstellbar.

In dem Strömungspfad 2 ist weiter ein Steuerelement 8 angeordnet, welches eine mit der am Steuerelement 8 herrschenden Temperatur veränderliche Größe oder Form aufweist.

Das Steuerelement 8 steht in Wirkverbindung mit dem Stellelement 7 und stellt dessen Position durch die Größenund/oder Formänderung temperaturabhängig ein.

Das Steuerelement 8 weist einen Kolben 9 auf, dessen Lage zwischen einer eingefahren Anfangsposition (Fig. 2) und einer ausgefahrenen Endposition (Fig. 3) verstellbar ist.

Die Anfangsposition gehört hierbei zu einem unteren Temperaturwert, während die Endposition bei einem oberen Temperaturwert eingenommen wird.

Bei einer Temperaturänderung über den Temperaturbereich zwischen der unteren Temperatur und der oberen Temperatur verstellt das Steuerelement 8 das Stellelement 6 entlang des Stellweges 10.

In einer Aufnahmekammer 11 des Steuerelements 8 ist ein Materialgemisch 12 angeordnet. Dieses Materialgemisch 12 weist mehrere Materialkomponenten 25, 26 auf, die jeweils voneinander abweichende Phasenübergangstemperaturen haben. Alternativ können die Materialkomponenten 25, 26 separat voneinander entlang des Stellwegs hintereinander in der Aufnahmekammer 11 angeordnet sein, um seriell zu wirken.

Im Ausführungsbeispiel ist das Materialgemisch 12 ein Thermowachsgemisch, und die Materialkomponenten sind unterschiedliche Thermowachse mit jeweils individueller Phasenübergangstemperatur. Die Phasenübergangstemperatur sind hierbei Schmelztemperaturen.

Bei einer Erwärmung oder Abkühlung über den erwähnten Temperaturbereich werden diese Phasenübergangstemperaturen sukzessive erreicht.

Bei jeder Phasenübergangstemperatur durchläuft die zugehörige Materialkomponente einen Phasenübergang und expandiert schlagartig bei Erwärmung beziehungsweise kontrahiert schlagartig bei Abkühlung. Hierdurch wird der Kolben 9 ein vorbestimmtes Stück nach außen getrieben.

Da die Phasenübergangstemperaturen voneinander beabstandet über den Temperaturbereich verteilt sind, ergibt sich so ein gestuftes Expandieren/Kontrahieren.

Näherungsweise mit einer Güte der Näherung, die mit der Anzahl der verwendeten Materialkomponenten zunimmt, ergibt sich so eine kontinuierliche temperaturabhängige Stellkurve des Stellelements 6.

Die einzelnen Zwischenpositionen sind gleichmäßig über den Stellweg 10 verteilt, sodass Zwischenpositionen existieren und eingenommen werden, die wenigstens 10% oder sogar wenigstens 30% der Gesamtlänge des Stellweges 10 von der Anfangsposition und der Endposition entfernt sind.

In den Figuren 2 und 3 sind zwei Größen des Steuerelements 8 gezeigt, die zu zwei Temperaturwerten gehören. Zur Einstellung der übrigen Zwischenpositionen nimmt das Steuerelement 6 zwischen den Extrempositionen liegende Größen an. Diese Zwischenpositionen gehören jeweils zu einem individuell zugeordneten Temperaturwert.

Das Stellelement 6 weist eine konische Grundform auf, die sich entgegen der Stellrichtung bei Temperaturerhöhung verjüngt.

Hierdurch ist bei hohen Temperaturen die Querschnittsfläche der Öffnung 19 größer als bei niedrigen Temperaturen.

Dies bedeutet, dass die Flüssigkeit im sanitären Einbauteil 1 umso schneller fließt, je höher die Eingangstemperatur am Steuerelement 8 ist. Hierdurch erwärmt sich die Flüssigkeit weniger stark.

Andererseits nimmt die Querschnittsfläche ab, wenn die Eingangstemperatur abnimmt und also die Differenz zwischen der Eingangstemperatur und einer (konstanten) Ausgangstemperatur zunimmt. Denn dann muss die Flüssigkeit stärker durchflussmengenbegrenzt sein, um eine ausreichende Erwärmung sicherstellen zu können.

In dem sanitären Einbauteil 1 ist weiter eine Rückstellfeder 13 angeordnet, die das Stellelement 6 bei einer Abkühlung in die Anfangsposition zurückstellt.

Die Rückstellfeder 13 ist im Strömungspfad 2 der Mengenreglereinheit 5 nachgeordnet und somit auf derselben Seite der Mengenreglereinheit 5 wie das Steuerelement 8 angeordnet.

Die Rückstellfeder 13 ist als Schraubenfeder ausgebildet und umschließt das Steuerelement 8.

Mit anderen Worten ist das Steuerelement 8 zumindest teilweise in einem von der Rückstellfeder 13 begrenzten Innenraum 14 (zumindest in ihrem Zustand gemäß Fig. 2) angeordnet. Die Steuerverbindung 29 - hier der Kolben 9 -, über welche das Steuerelement 8 das Stellelement 6 verstellt, durchgreift somit den Innenraum 14.

Bei weiteren Ausführungsbeispielen ist statt der Schraubenfeder eine Wellenfeder 35 als Rückstellfeder 13 ausgebildet.

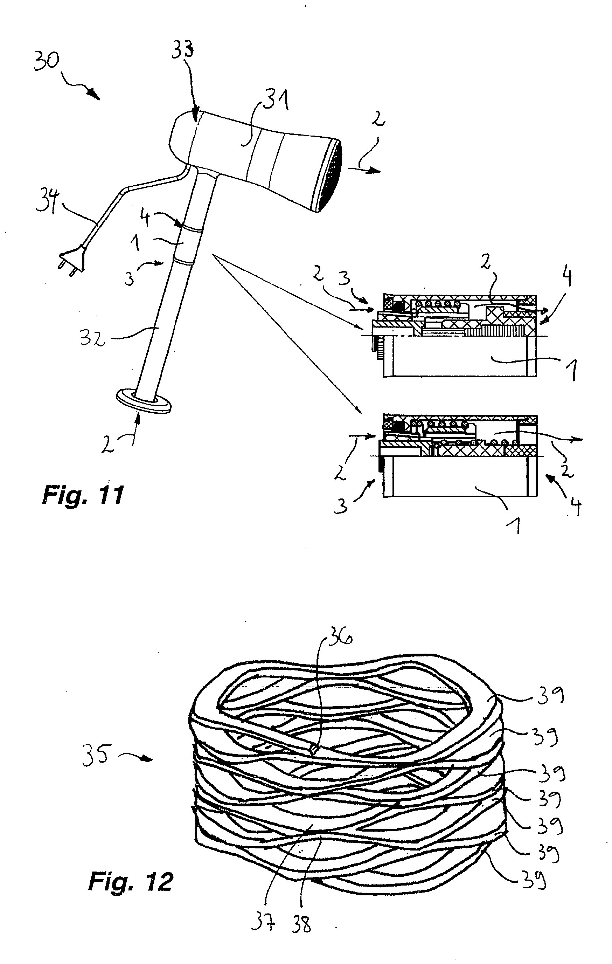

Eine derartige Wellenfeder 35 zeigt beispielhaft Fig. 12.

Die Wellenfeder 35 ist wie eine Schraubenfeder schraubenförmig gewunden.

Im Unterschied zu einer herkömmlichen Schraubenfeder bildet der Draht 36 in seinem Verlauf jedoch Täler 37 und Berge 38.

Fig. 12 zeigt einen Zustand der Wellenfeder 35, in dem sich die Windungen 39 punkt- oder abschnittweise berühren, ohne dass die Wellenfeder 35 auf Block ist. Vielmehr kann die Wellenfeder 35 weiter in Axialrichtung komprimiert werden.

Die Täler 37 und Berge 38 der einzelnen Windungen 39 sind in Umfangsrichtung so versetzt, dass jeweils ein Berg 38 einer Windung 39 ein Tal 37 der benachbarten Windung 39 berührt und umgekehrt. Hierdurch ergibt sich die erwähnte Elastizität auch über die berührende Position hinaus.

In dem Innenraum 14 in Fig. 1 bis 3 ist außerdem ein Führungselement 15 angeordnet, welches mit dem Stellelement 6 verbunden ist.

Das Führungselement 15 weist radial außenseitig einen Außenzylinder 16 auf, an welchem die Rückstellfeder 13 zur Führung anliegt.

In dem Führungselement 15 ist ein axial verlaufender Durchströmkanal 17 ausgebildet, durch welchen die strömende Flüssigkeit auf das Steuerelement 8 geleitet wird.

Somit ist das Steuerelement 8 thermisch gut an die Temperatur der strömenden Flüssigkeit angekoppelt.

Zur Mengenregelung weist die Mengenreglereinheit 5 einen O-Ring 18 auf, welcher von den Stellelement 6 durchsetzt ist.

Dieser O-Ring 18 wird bei zunehmendem zuströmseitigen Druck gegen eine ringförmige Öffnung 19 gepresst, wodurch diese immer weiter verengt wird. An dem mit einer konischen Grundform ausgestatteten Stellelement 6 sind längs des Strömungspfades 2 verlaufende Nuten 20 ausgebildet, an denen der O-Ring 19 anliegt.

Durch die Verengung erhöht sich der Strömungswiderstand, wodurch sich die gewünschte Mengenbegrenzung ergibt.

Durch Verstellen des Stellelements 6 in axialer Richtung kann die Querschnittsfläche der Öffnung 19 verändert werden, wodurch sich ein anderer Wert für die Durchflussmenge der realisierten Mengenbegrenzung ergibt. Bei der gezeigten Anordnung des Stellelements 6 und des Steuerelements 8 ergibt sich eine steigende Durchflussmenge mit steigender Temperatur am Steuerelement 8.

Das sanitäre Einbauteil 1 wird nach außen gehäusebildend von einer rohrförmigen Hülse 21 umschlossen, die an der Eingangsseite 3 und der Ausgangsseite 4 offen ausgebildet ist.

Die rohrförmige Hülse 21 nimmt die Mengenreglereinheit 5, das Steuerelement 8 und die Rückstellfeder 13 auf.

An dem Axialende der Eingangsseite 3 ist ein erster Einsatz 22 eingeklipst, welcher den O-Ring 18 hält.

Innenseitig ist in der rohrförmigen Hülse 21 an dem Axialende eine Rippe 23 ausgebildet, an welcher sich die Rückstellfeder 13 abstützt. Die Rippe 23 trägt außerdem den O-Ring 18. Es können auch mehrere Rippen axial nebeneinander ausgebildet sein, die Haltefunktionen übernehmen.

An dem zweiten Axialende, also an der Ausgangsseite 4, ist ein zweiter Einsatz 24 eingeklipst, an welchem sich das Steuerelement 8 abstützt.

Somit ist eine funktionsfähig vormontierbare Einheit eines sanitären Einbauteils 1 bereitgestellt, die als Ganzes montierbar ist.

An die Ausgangsseite 4 wird im Betrieb ein nicht weiter dargestelltes, an sich bekanntes Heizelement mit einer konstanten Heizleistung angeschlossen. Je nach Temperatur an der Eingangsseite 3 erhöht oder erniedrigt das sanitäre Einbauteil 1 die Durchflussmenge, um die an der Ausgangsseite ausströmende Flüssigkeit, beispielsweise Wasser, auf eine konstante Temperatur aufheizen zu können, ohne dass die Heizleistung variiert werden muss.

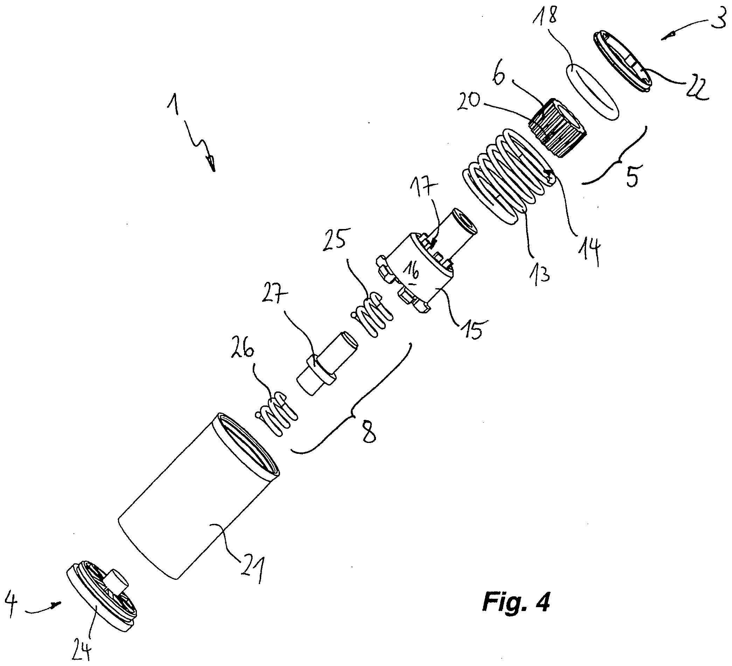

Fig. 4 bis 7 zeigen ein weiteres erfindungsgemäßes sanitäres Einbauteil 1. Konstruktiv und/oder funktionell zu dem Ausführungsbeispiel nach Fig. 1 bis 3 gleichartige oder identische Bauteile und Funktionseinheiten sind mit denselben Bezugszeichen bezeichnet und nicht gesondert beschrieben. Die vorstehenden Erläuterungen gelten daher entsprechend.

Das sanitäre Einbauteil 1 gemäß Fig. 4 bis 7 unterscheidet sich von dem sanitären Einbauteil 1 gemäß Fig. 1 bis 3 dadurch, dass statt des Materialgemisches 12 zwei Materialkomponenten 25, 26 seriell im Strömungspfad 2 hintereinander angeordnet sind.

Ein Führungselement 27 führt die Materialkomponenten 25, 26 und verbindet sie miteinander.

Die Materialkomponenten 25, 26 sind aus unterschiedlichen Materialien mit Formgedächtnis gefertigt und weisen jeweils eine Phasenübergangstemperatur auf, oberhalb derer sie sich schlagartig ausdehnen.

Die Phasenübergangstemperatur lässt sich durch geeignete Wahl von Zusatzstoffen einstellen.

Hierbei hat die Materialkomponente 25 eine niedrigere Phasenübergangstemperatur als die Materialkomponente 26.

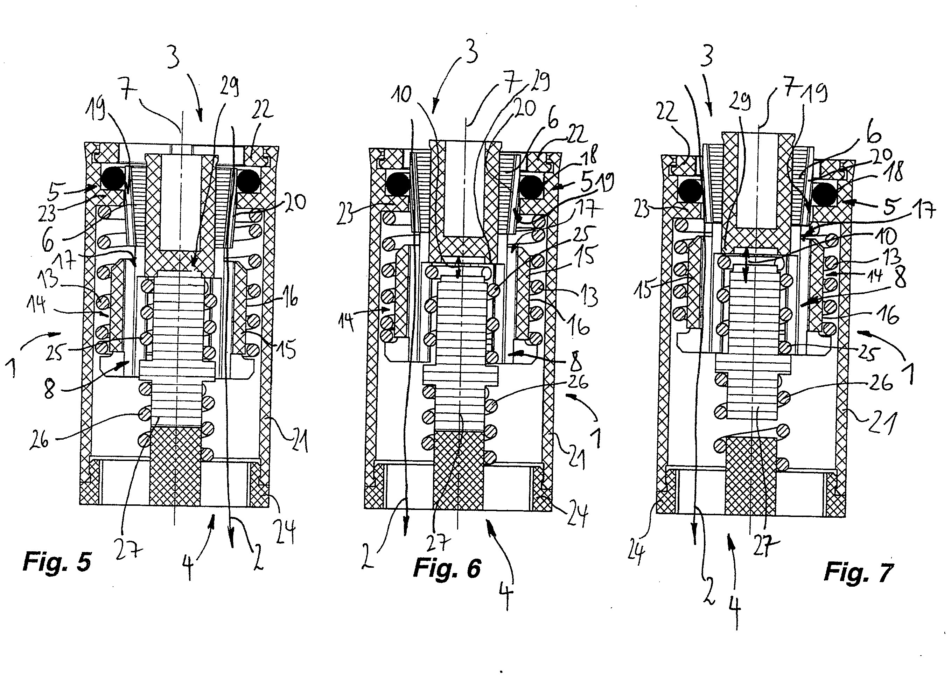

Fig. 5 zeigt das sanitäre Einbauteil 1 bei dem unteren Temperaturwert.

Beide Materialkomponenten 25, 26 sind kontrahiert, und es ist ein minimaler Durchfluss an der Mengenreglereinheit 5 eingestellt.

Wird nun das einströmende Wasser erwärmt, so wird zuerst die Phasenübergangstemperatur der ersten Materialkomponente 25 erreicht, und diese Materialkomponente dehnt sich schlagartig um einen bestimmten Betrag aus. Die Öffnung 19 wird daher etwas weiter geöffnet und nimmt nun eine Zwischenposition zwischen der Anfangsposition gemäß Fig. 5 und der Endposition gemäß Fig. 7 ein. Es ergibt sich die Situation gemäß Fig. 6.

Bleibt die Temperatur der einströmenden Flüssigkeit nun konstant, beliebt es bei der Zwischenposition gemäß Fig. 6. Die Zwischenposition ist mit anderen Worten stabil.

Wird die Temperatur der einströmenden Flüssigkeit weiter erhöht, so wird die Phasenübergangstemperatur der zweiten Materialkomponente 26 erreicht, und diese dehnt sich schlagartig aus.

Im Ergebnis addieren sich die Ausdehnungen der Materialkomponenten 25, 26, da diese seriell angeordnet sind.

Es wird nun die Endposition gemäß Fig. 7 angenommen, die eine maximale Durchflussmenge an der Mengenreglereinheit 5 definiert.

Es ist erkennbar, dass der Stellweg 10 in Fig. 7 länger als in Fig. 6 ist.

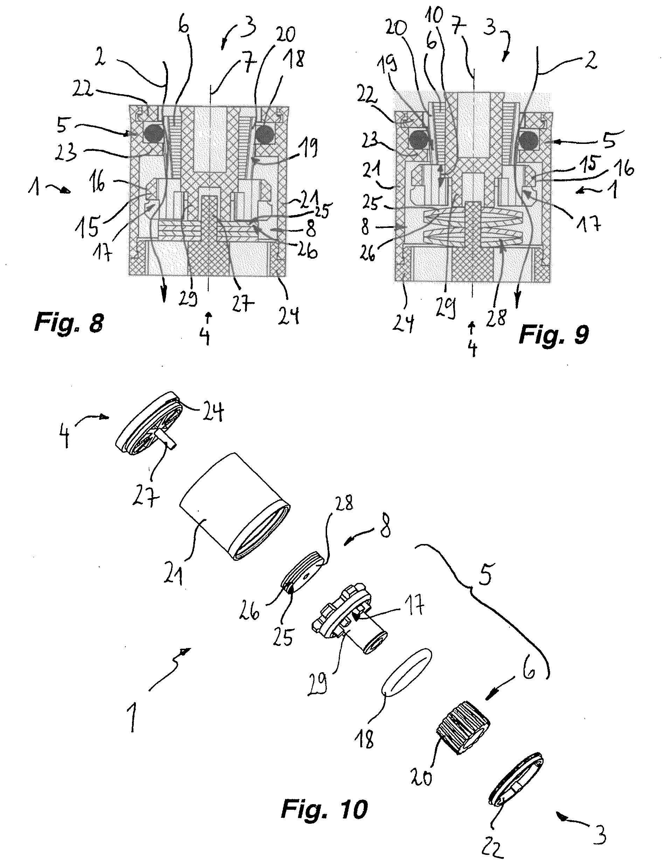

Fig. 8 bis 10 zeigen ein weiteres erfindungsgemäßes sanitäres Einbauteil 1. Konstruktiv und/oder funktionell zu den Ausführungsbeispielen nach Fig. 1 bis 7 gleichartige oder identische Bauteile und Funktionseinheiten sind mit denselben Bezugszeichen bezeichnet und nicht gesondert beschrieben. Die vorstehenden Erläuterungen gelten daher entsprechend.

Bei dem Ausführungsbeispiel gemäß Fig. 8 bis 10 ist statt des Materials mit Formgedächtnis eine Stapelanordnung von Bimetallelementen 28 eingesetzt.

Jedes Bimetallelement 28 ist scheibenförmig ausgebildet, wobei in jeder Scheibe zwei Materialkomponenten 25, 26 mit voneinander abweichenden thermischen Ausdehnungskoeffizienten miteinander verbunden sind.

Somit setzt das Bimetallelement 28 eine unterschiedliche Erwärmung der verschiedenen miteinander verbundenen Materialkomponenten 25, 26 in eine makroskopische Formänderung um, mit welcher das Stellelement 6 stellbar ist.

Fig. 8 zeigt die Anfangsposition des Stellelements 6 bei dem unteren Temperaturwert, Fig. 9 die Endposition des Stellelements 6 bei dem oberen Temperaturwert. In der Endposition ist jedes Bimetallelement 28 gewölbt.

Da sich die Bimetallelemente 28 mit steigender Temperatur kontinuierlich ausdehnen, wird das Stellelement 6 bei Zwischentemperaturwerten zwischen dem unteren Temperaturwert und dem oberen Temperaturwert in Zwischenpositionen längs des Stellwegs 10 verstellt.

Bei einer Abkühlung verformt sich jedes Bimetallelement 28 wieder zurück in die Ausgangsform gemäß Fig. 8. Der an der Eingangsseite 3 anliegende Wasserdruck reicht in der Regel aus, um das Stellelement 6 zurück in die Ausgangsposition zu stellen.

Unterstützend kann eine nicht weiter dargestellte Rückstellfeder analog zu den vorhergehenden Ausführungsbeispielen vorgesehen sein, die durch das Führungselement 15 wie zuvor beschrieben geführt sein kann.

Fig. 11 zeigt eine erfindungsgemäße Duschanordnung 30.

Die Duschanordnung 30 hat einen Duschkopf 31, der an einer Zulaufleitung 32 befestigt ist.

Die Zulaufleitung 32 ist an einer nicht weiter dargestellten Wand oder Decke befestigt.

Am Duschkopf 31 ist ein Heizelement 33 angeordnet, der über einen elektrischen Anschluss 34 betreibbar ist, um das Wasser aus der Zulaufleitung 32 aufzuheizen. Das Heizelement 33 hat eine konstante Heizleistung, die durch die elektrische Leistungsaufnahme gegeben ist.

Die Zulaufleitung 32 definiert einen Strömungspfad 2 für fließendes Wasser.

In diesen Strömungspfad 2 ist in die Zulaufleitung 32 ein erfindungsgemäßes sanitäres Einbauteil 1 eingesetzt. In Fig. 11 sind rechts beispielhaft die sanitären Einbauteile gemäß Fig. 1 bis 3 (oben) und gemäß Fig. 4 bis 7 (unten) dargestellt. Es können jedoch auch andere erfindungsgemäße sanitäre Einbauteile 1 eingesetzt sein, beispielsweise das sanitäre Einbauteil 1 gemäß Fig. 8 bis 10.

Der Duschkopf 31 kann bei weiteren Ausführungsbeispielen auch als Hand- oder Seitenbrause ausgebildet sein.

Im Betrieb stellt das sanitäre Einbauteil 1 die Durchflussmenge in Abhängigkeit von der Wassertemperatur an der Eingangsseite 3 so ein, dass das Heizelement 33 das fließende Wasser auf eine konstante Gebrauchstemperatur erwärmt. Die Durchflussmenge wird demnach umso größer, je näher die Wassertemperatur an der Eingangsseite 3 an die Gebrauchstemperatur rückt. Die Durchflussmenge wird umgekehrt umso kleiner, je größer der Abstand zwischen der Wassertemperatur an der Eingangsseite 3 und der Gebrauchstemperatur ist, damit die begrenzte Heizleistung des Heizelements 33 ausreicht, um die Gebrauchstemperatur tatsächlich zu erreichen.

Da das Stellelement 6 - wie beschrieben - in feinen Stufen oder sogar kontinuierlich temperaturabhängig verstellbar ist, können so auch geringere Temperaturschwankungen im Betrieb, wie sie beispielsweise beim Wechsel von abgestandenem Wasser auf frisch zugeführtes Wasser aus den Versorgungsnetz auftreten, ausgeglichen werden.

Bei einem sanitären Einbauteil 1 mit einer Mengenreglereinheit 5 und einem eine Durchflussmenge einstellenden, beweglichen Stellelement 6, welches in Steuerverbindung mit einem temperatursensitiven Steuerelement 8 steht, wird vorgeschlagen, eine Rückstellfeder 13 in Strömungsrichtung auf derselben Seite der Mengenreglereinheit 5 wie das Steuerelement 5 anzuordnen und/oder das Steuerelement 8 zur Einnahme wenigstens einer Zwischenposition auszubilden.

### Bezugszeichenliste

- 1: sanitäres Einbauteil
- 2: Strömungspfad
- 3: Eingangsseite
- 4: Ausgangsseite
- 5: Mengenreglereinheit
- 6: Stellelement
- 7: Längsachse
- 8: Steuerelement
- 9: Kolben
- 10: Stellweg
- 11: Aufnahmekammer
- 12: Materialgemisch
- 13: Rückstellfeder
- 14: Innenraum
- 15: Führungselement
- 16: Außenzylinder
- 17: Durchströmkanal
- 18: O-Ring
- 19: Öffnung
- 20: Nut
- 21: rohrförmige Hülse
- 22: erster Einsatz
- 23: Rippe
- 24: zweiter Einsatz
- 25: Materialkomponente
- 26: Materialkomponente
- 27: Führungselement
- 28: Bimetallelement
- 29: Steuerverbindung
- 30: Duschanordnung
- 31: Duschkopf
- 32: Zulaufleitung
- 33: Heizelement
- 34: Anschluss
- 35: Wellenfeder
- 36: Draht
- 37: Tal
- 38: Berg
- 39: Windung

## Patentansprüche

1. Sanitäres Einbauteil (1) mit einer in einem Strömungspfad (2) angeordneten Mengenreglereinheit (5), die ein bewegliches Stellelement (6) aufweist, wobei mit dem Stellelement (6) eine durch die Mengenreglereinheit (5) definierte Durchflussmenge einstellbar ist, und mit einem in Abhängigkeit von einer Temperatur formveränderlichen Steuerelement (8), welches in dem Strömungspfad (2) angeordnet ist und mit dem Stellelement (6) in Wirkverbindung steht, wobei eine Erhöhung der Temperatur am Steuerelement (8) eine Verstellung des Stellelements (6) hin zu größeren Durchflussmengen bewirkt, und mit einer das Stellelement (6) beaufschlagenden Rückstellfeder (13), wobei das Steuerelement (8) und die Rückstellfeder (13) im Strömungspfad stromabwärts in Bezug auf die Mengenreglereinheit angeordnet sind, **dadurch gekennzeichnet, dass** das Steuerelement in Abhängigkeit von der Temperatur an der Eingangsseite formveränderbar ist, und dass die durch die Mengenreglereinheit (5) definierte Durchflussmenge mit Hilfe des Stellelementes derart einstellbar ist, dass die definierte Durchflussmenge bei niedrigen Temperaturen geringer als bei höheren Temperaturen am Steuerelement ist.

2. Sanitäres Einbauteil (1) nach Anspruch 1, **dadurch gekennzeichnet, dass** die Rückstellfeder (13) als Schraubenfeder, als Wellenfeder (36) oder als Tellerfeder oder Stapelanordnung von Tellerfedern, ausgebildet ist und/oder dass das Steuerelement (8) und/oder eine Steuerverbindung (29) zwischen dem Stellelement (6) und dem Steuerelement (8) einen von der Rückstellfeder (13) umschlossenen oder zumindest radial begrenzten Innenraum (14) im Strömungspfad (2) durchsetzt.

3. Sanitäres Einbauteil (1) nach Anspruch 1 oder 2, **dadurch gekennzeichnet, dass** an dem Stellelement (6) ein die Rückstellfeder (13) tragendes Führungselement (15) ausgebildet, insbesondere angeformt, ist und/oder dass das Führungselement (15) einen Durchströmkanal (17) einschließt, insbesondere wobei das Steuerelement (8) thermisch an den Durchströmkanal (17) angekoppelt ist.

4. Sanitäres Einbauteil (1) nach einem der Ansprüche 1 bis 3, **dadurch gekennzeichnet, dass** mit dem Stellelement (6) eine Querschnittsfläche einer Öffnung (19) einstellbar ist und/oder dass das Stellelement (6) eine sich verjüngende Grundform, insbesondere eine konische Grundform, hat.

5. Sanitäres Einbauteil (1) nach einem der Ansprüche 1 bis 4, **dadurch gekennzeichnet, dass** das Stellelement (6) einen O-Ring (18) durchsetzt, wobei der O-Ring (18) bei einer steigenden Druckdifferenz über einer Öffnung die oder eine Öffnung verengt, und/oder dass das Stellelement (6) radial außenseitig längs des Strömungspfades (2) verlaufende Nuten aufweist.

6. Sanitäres Einbauteil (1) nach einem der Ansprüche 1 bis 5, **dadurch gekennzeichnet, dass** die Mengenreglereinheit (5), das Steuerelement (8) und die Rückstellfeder (13) in einer rohrförmigen Hülse (21) angeordnet sind und/oder dass die Mengenreglereinheit (5) an einem ersten Axialende ausgebildet oder abgestützt und das Steuerelement (8) an einem zweiten Axialende abgestützt ist.

7. Duschanordnung (30) mit einem in einem Strömungspfad (2) angeordneten Heizelement (33), welches vorzugsweise mit einer konstanten Heizleistung ausgebildet ist, und mit einer dem Heizelement (33) in Strömungsrichtung vorgeschalteten sanitären Einbauteil (1), **dadurch gekennzeichnet, dass** das sanitäre Einbauteil (1) nach einem der vorangegangenen Ansprüche ausgebildet ist.

8. Sanitäres Einbauteil (1) nach einem der Ansprüche 1 bis 6, mit einer in einem Strömungspfad (2) angeordneten Mengenreglereinheit (5), die ein bewegliches Stellelement (6) aufweist, wobei mit dem Stellelement (6) eine durch die Mengenreglereinheit (5) definierte Durchflussmenge einstellbar ist, und mit einem in Abhängigkeit von einer Temperatur form- und/oder größenveränderlichen Steuerelement (8), welches in dem Strömungspfad (2) angeordnet ist und mit dem Stellelement (6) in Wirkverbindung steht, wobei mit dem Steuerelement (8) bei einer Änderung der Temperatur über einen Temperaturbereich zwischen einem unteren Temperaturwert und einem oberen Temperaturwert das Stellelement (6) entlang eines Stellweges (10) zwischen einer Anfangsposition und einer Endposition verstellbar ist, und wobei das Steuerelement (8) bei wenigstens einem Zwischentemperaturwert zwischen dem unteren Temperaturwert und dem oberen Temperaturwert eine Zwischenposition des Stellelements (6) im Stellweg zwischen der Anfangsposition und der Endposition einstellt.

9. Sanitäres Einbauteil (1) nach einem der Ansprüche 1 bis 8, **dadurch gekennzeichnet, dass** die Zwischenposition von der Anfangsposition und/oder der Endposition wenigstens 1%, vorzugsweise wenigstens 10%, besonders vorzugsweise wenigstens 30%, einer Gesamtlänge des Stellweges (10) beabstandet ist.

10. Sanitäres Einbauteil (1) nach einem der Ansprüche 1 bis 9, **dadurch gekennzeichnet, dass** das Steuerelement (8) zu wenigstens drei voneinander verschiedenen Temperaturwerten drei voneinander verschiedene Formen und/oder Größen annimmt und/oder dass eine Erhöhung der Temperatur am Steuerelement (8) eine Verstellung des Stellelements (6) hin zu größeren Durchflussmengen bewirkt.

11. Sanitäres Einbauteil nach einem der Ansprüche 1 bis 10, **dadurch gekennzeichnet, dass** das Steuerelement (8) wenigstens zwei Materialkomponenten (25, 26) aufweist, die innerhalb des Temperaturbereichs voneinander verschiedene Ausdehnungskoeffizienten und/oder Phasenübergangstemperaturen haben.

12. Sanitäres Einbauteil (1) nach einem der Ansprüche 1 bis 11, **dadurch gekennzeichnet, dass** das Stellelement (6) ein Bimetallelement (28), insbesondere einen Bimetallstreifen oder eine Bimetallscheibe, aufweist.

13. Sanitäres Einbauteil (1) nach einem der Ansprüche 1 bis 12, **dadurch gekennzeichnet, dass** die Materialkomponenten (25, 26) in einer Stellrichtung hintereinander angeordnet sind und/oder dass die Materialkomponenten (25, 26) jeweils aus einem Material mit Formgedächtnis ausgebildet sind.

14. Sanitäres Einbauteil (1) nach einem der Ansprüche 1 bis 13, **dadurch gekennzeichnet, dass** die Materialkomponenten (25, 26) ein Materialgemisch bilden und/oder dass das Materialgemisch ein Thermowachsgemisch ist, wobei die Materialkomponenten (25, 26) jeweils eine Thermowachskomponente sind und die Phasenübergangstemperaturen durch den jeweiligen Schmelzpunkt der Thermowachskomponente gegeben sind.

15. Sanitäres Einbauteil (1) nach einem der Ansprüche 1 bis 14, **dadurch gekennzeichnet, dass** das Stellelement (6) in der Anfangsposition eine geringere Durchflussmenge definiert als in der Endposition und/oder dass mit dem Steuerelement (8) und dem Stellelement (6) eine mit steigender Temperatur abnehmende Durchflussmenge der Mengenreglereinheit (5) eingestellt ist.

## Claims

1. Sanitary installation part (1) having a flow rate regulator unit (5) which is arranged in a flow path (2) and has a movable adjustment element (6), wherein a throughflow rate defined by the flow rate regulator unit (5) is settable by way of the adjustment element (6), and having a control element (8) which is changeable in shape in a manner dependent on a temperature and is arranged in the flow path (2) and is operatively connected to the adjustment element (6), wherein an increase in the temperature at the control element (8) effects an adjustment of the adjustment element (6) towards higher throughflow rates, and having a restoring spring (13) which acts on the adjustment element (6), wherein the control element (8) and the restoring spring (13) are arranged in the flow path downstream in relation to the flow rate regulator unit,
**characterized in that**
the control element is changeable in shape in a manner dependent on the temperature at the inlet side, and **in that** the throughflow rate defined by the flow rate regulator unit (5) is, with the aid of the adjustment element, settable such that the defined throughflow rate is lower at low temperatures than at relatively high temperatures at the control element.

2. Sanitary installation part (1) according to Claim 1, **characterized in that** the restoring spring (13) is in the form of a helical spring, of a wave spring (36) or of a disc spring or stacked arrangement of disc springs, and/or **in that** the control element (8) and/or a control connection (29) between the adjustment element (6) and the control element (8) pass(es) through an interior space (14) in the flow path (2), which interior space is enclosed or at least radially delimited by the restoring spring (13).

3. Sanitary installation part (1) according to Claim 1 or 2, **characterized in that** a guide element (15) carrying the restoring spring (13) is formed, in particular integrally formed, on the adjustment element (6), and/or in that the guide element (15) encloses a throughflow duct (17), in particular wherein the control element (8) is thermally coupled to the throughflow duct (17).

4. Sanitary installation part (1) according to one of Claims 1 to 3, **characterized in that** a cross-sectional area of an opening (19) is settable by way of the adjustment element (6), and/or **in that** the adjustment element (6) has a narrowing basic shape, in particular a conical basic shape.

5. Sanitary installation part (1) according to one of Claims 1 to 4, **characterized in that** the adjustment element (6) passes through an O-ring (18), wherein, in the case of an increasing pressure difference across an opening, the O-ring (18) narrows the or an opening, and/or **in that** the adjustment element (6) has grooves which extend along the flow path (2) radially on the outside.

6. Sanitary installation part (1) according to one of Claims 1 to 5, **characterized in that** the flow rate regulator unit (5), the control element (8) and the restoring spring (13) are arranged in a tubular sleeve (21), and/or **in that** the flow rate regulator unit (5) is formed or supported at a first axial end and the control element (8) is supported at a second axial end.

7. Shower arrangement (30) having a heating element (33) which is arranged in a flow path (2) and is preferably designed to have a constant heating power, and having a sanitary installation part (1) which is arranged upstream of the heating element (33) in the flow direction, **characterized in that** the sanitary installation part (1) is designed according to one of the preceding claims.

8. Sanitary installation part (1) according to one of Claims 1 to 6, having a flow rate regulator unit (5) which is arranged in a flow path (2) and has a movable adjustment element (6), wherein a throughflow rate defined by the flow rate regulator unit (5) is settable by way of the adjustment element (6), and having a control element (8) which is changeable in shape and/or size in a manner dependent on a temperature and is arranged in the flow path (2) and is operatively connected to the adjustment element (6), wherein, in the case of a change in the temperature over a temperature range between a lower temperature value and an upper temperature value, the adjustment element (6) is adjustable along an adjustment path (10) between a starting position and an end position by way of the control element (8), and wherein the control element (8) sets an intermediate position of the adjustment element (6) in the adjustment path between the starting position and the end position at at least one intermediate temperature value between the lower temperature value and the upper temperature value.

9. Sanitary installation part (1) according to one of Claims 1 to 8, **characterized in that** the intermediate position is spaced apart from the starting position and/or the end position by at least 1%, preferably at least 10%, particularly preferably at least 30%, of a total length of the adjustment path (10).

10. Sanitary installation part (1) according to one of Claims 1 to 9, **characterized in that** the control element (8) assumes three mutually different shapes and/or sizes at at least three mutually different temperature values, and/or **in that** an increase in the temperature at the control element (8) effects an adjustment of the adjustment element (6) towards higher throughflow rates.

11. Sanitary installation part according to one of Claims 1 to 10, **characterized in that** the control element (8) has at least two material components (25, 26) which have mutually different coefficients of expansion and/or phase transition temperatures within the temperature range.

12. Sanitary installation part (1) according to one of Claims 1 to 11, **characterized in that** the adjustment element (6) has a bimetallic element (28), in particular a bimetallic strip or a bimetallic disc.

13. Sanitary installation part (1) according to one of Claims 1 to 12, **characterized in that** the material components (25, 26) are arranged one behind the other in an adjustment direction, and/or **in that** the material components (25, 26) are each formed from a material having shape memory.

14. Sanitary installation part (1) according to one of Claims 1 to 13, **characterized in that** the material components (25, 26) form a material mixture, and/or **in that** the material mixture is a thermo-wax mixture, wherein the material components (25, 26) are in each case a thermo-wax component and the phase transition temperatures are given by the respective melting point of the thermo-wax component.

15. Sanitary installation part (1) according to one of Claims 1 to 14, **characterized in that** the adjustment element (6) defines a lower throughflow rate in the starting position than in the end position, and/or **in that** a throughflow rate of the flow rate regulator unit (5) that decreases with increasing temperature is set by way of the control element (8) and the adjustment element (6).

## Revendications

1. Composant sanitaire (1) comprenant une unité de régulation de débit (5) disposée dans un chemin d'écoulement (2) qui présente un élément de réglage mobile (6), dans lequel un débit défini à travers l'unité de régulation de débit (5) peut être réglé à l'aide de l'élément de réglage (6), et comprenant un élément de commande (8) de forme variable en fonction d'une température, qui est disposé dans le chemin d'écoulement (2) et qui est en liaison active avec l'élément de réglage (6), dans lequel une augmentation de la température à l'élément de commande (8) provoque un déplacement de l'élément de réglage (6) en direction d'un débit plus élevé, et comprenant un ressort de rappel (13) qui agit sur l'élément de réglage (6), dans lequel l'élément de commande (8) et le ressort de rappel (13) sont disposés dans le chemin d'écoulement en aval par rapport à l'unité de régulation de débit, **caractérisé en ce que** l'élément de commande est de forme variable en fonction de la température au niveau du côté d'entrée, et **en ce que** le débit défini par l'unité de régulation du débit (5) peut être réglé à l'aide de l'élément de réglage, de telle manière que le débit défini soit plus faible pour de basses températures que pour des températures plus élevées au niveau de l'élément de commande.

2. Composant sanitaire (1) selon la revendication 1, **caractérisé en ce que** le ressort de rappel (13) est formé par un ressort hélicoïdal, par un ressort sinueux (36), ou par une rondelle élastique ou un empilement de rondelles élastiques, et/ou **en ce que** l'élément de commande (8) et/ou une liaison de commande (29) entre l'élément de réglage (6) et l'élément de commande (8) traverse un espace intérieur (14) entouré ou au moins partiellement limité radialement par le ressort de rappel (13) dans le chemin d'écoulement (2).

3. Composant sanitaire (1) selon la revendication 1 ou 2, **caractérisé en ce qu'**un élément de guidage (15) portant le ressort de rappel (13) est réalisé, en particulier formé sur l'élément de réglage (6) et/ou **en ce que** l'élément de guidage (15) inclut un canal d'écoulement (17), en particulier dans lequel l'élément de commande (8) est couplé thermiquement au canal d'écoulement (17).

4. Composant sanitaire (1) selon l'une quelconque des revendications 1 à 3, **caractérisé en ce qu'**une surface de section transversale d'une ouverture (19) peut être réglée à l'aide de l'élément de réglage (6) et/ou **en ce que** l'élément de réglage (6) présente une forme de base qui se rétrécit, en particulier une forme de base conique.

5. Composant sanitaire (1) selon l'une quelconque des revendications 1 à 4, **caractérisé en ce que** l'élément de réglage (6) traverse un joint torique (18), dans lequel le joint torique (18) étrangle la ou une ouverture lorsqu'une différence de pression augmente sur une ouverture, et/ou **en ce que** l'élément de réglage (6) présente radialement à l'extérieur des rainures qui s'étendent le long du chemin d'écoulement (2).

6. Composant sanitaire (1) selon l'une quelconque des revendications 1 à 5, **caractérisé en ce que** l'unité de régulation de débit (5), l'élément de commande (8) et le ressort de rappel (13) sont disposés dans une douille tubulaire (21) et/ou **en ce que** l'unité de régulation de débit (5) est formée et appuyée au niveau d'une première extrémité axiale et l'élément de commande (8) est appuyé au niveau d'une deuxième extrémité axiale.

7. Système de douche (30) comprenant un élément chauffant (33) disposé dans un chemin d'écoulement (2), qui est configuré de préférence avec une puissance de chauffage constante, et comprenant un composant sanitaire (1) agencé avant l'élément chauffant (33) dans la direction d'écoulement, **caractérisé en ce que** le composant sanitaire (1) est réalisé selon l'une quelconque des revendications précédentes.

8. Composant sanitaire (1) selon l'une quelconque des revendications 1 à 6, comprenant une unité de régulation de débit (5) disposée dans un chemin d'écoulement (2), qui présente un élément de réglage mobile (6), dans lequel un débit défini à travers l'unité de régulation de débit (5) peut être réglé à l'aide de l'élément de réglage (6), et comprenant un élément de commande de forme et/ou de grandeur variable en fonction d'une température, qui est disposé dans le chemin d'écoulement (2) et qui est en liaison active avec l'élément de réglage (6), dans lequel l'élément de réglage (6) est déplaçable avec l'élément de commande (8) lors d'une variation de la température dans une plage de température comprise entre une valeur de température inférieure et une valeur de température supérieure le long d'une course de réglage (10) comprise entre une position initiale et une position finale, et dans lequel l'élément de commande (8) règle, pour au moins une valeur de température intermédiaire entre la valeur de température inférieure et la valeur de température supérieure une position intermédiaire de l'élément de réglage (6) dans la course de réglage entre la position initiale et la position finale.

9. Composant sanitaire (1) selon l'une quelconque des revendications 1 à 8, **caractérisé en ce que** la position intermédiaire est distante de la position initiale et/ou de la position finale d'au moins 1 %, de préférence d'au moins 10 %, de préférence encore d'au moins 30 %, d'une longueur totale de la course de réglage (10).

10. Composant sanitaire (1) selon l'une quelconque des revendications 1 à 9, **caractérisé en ce que** l'élément de commande (8) occupe pour au moins trois valeurs de température différentes l'une de l'autre trois formes et/ou grandeurs différentes l'une de l'autre et/ou **en ce qu'**une augmentation de la température au niveau de l'élément de commande (8) provoque un déplacement de l'élément de réglage (6) vers des débits plus élevés.

11. Composant sanitaire (1) selon l'une quelconque des revendications 1 à 10, **caractérisé en ce que** l'élément de commande (8) présente au moins deux composantes de matières (25, 26), qui présentent à l'intérieur de la plage de température des coefficients de dilatation différents l'un de l'autre et/ou des températures de transition de phase différentes l'une de l'autre.

12. Composant sanitaire (1) selon l'une quelconque des revendications 1 à 11, **caractérisé en ce que** l'élément de réglage (6) présente un élément bimétallique (28), en particulier une lamelle bimétallique ou une rondelle bimétallique.

13. Composant sanitaire (1) selon l'une quelconque des revendications 1 à 12, **caractérisé en ce que** les composantes de matières (25, 26) sont disposées l'une derrière l'autre dans une direction de réglage et/ou **en ce que** les composantes de matières (25, 26) sont réalisées respectivement avec une matière dotée de mémoire de forme.

14. Composant sanitaire (1) selon l'une quelconque des revendications 1 à 13, **caractérisé en ce que** les composantes de matières (25, 26) forment un mélange de matières et/ou **en ce que** le mélange de matières est un mélange de cires à chaud, dans lequel les composantes de matières (25, 26) sont respectivement une composante de cire à chaud et les températures de transition de phase sont fournies par le point de fusion respectif des composantes de cire à chaud.

15. Composant sanitaire (1) selon l'une quelconque des revendications 1 à 14, **caractérisé en ce que** l'élément de réglage (6) définit dans la position initiale un débit plus faible que dans la position finale et/ou **en ce qu'**un débit de l'unité de régulation de débit (5), qui diminue lorsque la température de l'eau augmente, est réglé à l'aide de l'élément de commande (8) et l'élément de réglage (6).
